(19) Europäisches Patentamt
European Patent Office
Office européen des brevets

(11) **EP 2 087 315 B1**

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(21) Anmeldenummer: **07820163.9**

(22) Anmeldetag: **13.09.2007**

(51) Int Cl.:
***G01C 19/5712*** *(2012.01)*

(86) Internationale Anmeldenummer:
**PCT/EP2007/059607**

(87) Internationale Veröffentlichungsnummer:
**WO 2008/040616 (10.04.2008 Gazette 2008/15)**

(54) **ANORDNUNG ZUR MESSUNG EINER DREHRATE MIT EINEM VIBRATIONSSENSOR**

ARRANGEMENT FOR MEASURING A RATE OF ROTATION USING A VIBRATION SENSOR

DISPOSITIF POUR MESURER UNE VITESSE DE ROTATION AU MOYEN D'UN CAPTEUR VIBRANT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.09.2006 DE 102006046772**

(43) Veröffentlichungstag der Anmeldung:
**12.08.2009 Patentblatt 2009/33**

(73) Patentinhaber:
• **Continental Automotive GmbH**
 **30165 Hannover (DE)**
• **Sensordynamics AG**
 **8403 Graz-Lebring (AT)**

(72) Erfinder:
• **GIER, Lothar**
 **61231 Bad Nauheim (DE)**
• **KEMPE, Volker**
 **A-8501 Lieboch (AT)**
• **STRLE, Drago**
 **1108 Ljubljana (SI)**

(56) Entgegenhaltungen:
**DE-A1- 10 006 933    US-A1- 2006 156 815
US-B1- 6 626 039**

EP 2 087 315 B1

**Beschreibung**

Die Erfindung betrifft eine Anordnung zur Messung einer Drehrate mit einem Vibrationssensor, dessen Vibration senkrecht zu einer ersten Achse mit Hilfe von kapazitiven Antriebselementen angeregt und gemessen wird und dessen Drehung in einer zweiten Achse, die durch eine Drehung in einer dritten Achse unter Wirkung der Corioliskraft angeregt wird, mit Hilfe kapazitiver Messelemente gemessen wird, wobei die kapazitiven Elemente jeweils von feststehenden Elektroden und von mit dem Vibrationssensor beweglichen Elektroden gebildet werden und die beweglichen Elektroden gemeinsam mit einem feststehenden Anschluss verbunden sind.

Drehratensensoren werden beispielsweise in Sicherheitssystemen für Kraftfahrzeuge angewandt. Ein als Kreisel ausgebildeter Vibrationssensor ist beispielsweise aus US 5,955,668 bekannt geworden. Dabei erfolgt die Anregung der Rotationsvibration mit Hilfe elektrostatischer Antriebe. Die Gewinnung des Ausgangssignals sowie eines Signals zur Regelung der Antriebe erfolgt ebenfalls elektrostatisch, nämlich durch Kapazitätsmessungen mit Hilfe zugeführter Wechselspannungen. Dabei ist die Amplitude der zum Antrieb zugeführten Wechselspannung wesentlich größer als diejenige der durch die Kapazitätsänderung gewonnenen Signale, so dass insbesondere das zur Ermittlung der Drehrate weiter zu verarbeitende Ausgangssignal erheblichen Störungen unterliegt. Dies beeinträchtigt die Genauigkeit der Messung.

Druckschrift US-A1-2006/156815 offenbart eine Anordnung zur Drehratenmessung mit einem Vibrationssensor, dessen Vibration senkrecht zu einer ersten Achse mit Hilfe von kapazitiven Antriebselementen angeregt und gemessen wird und dessen Drehung in einer zweiten Achse, die durch eine Drehung in einer dritten Achse mittels Corioliskraft angeregt wird, mit Hilfe kapazitiver Messelemente gemessen wird, wobei die Elemente jeweils von feststehenden Elektroden und von mit dem Sensor beweglichen Elektroden gebildet werden und die beweglichen Elektroden gemeinsam mit einem feststehenden Anschluss verbunden sind. Dabei weist die Anordnung vier Gruppen von kapazitiven Antriebselementen auf, von denen jeweils zwei Gruppen mit gegenphasigen Wechselspannungsanteilen und gleichen Vorspannungen beaufschlagt sind.

In der Patentschrift US-B1-6 626 039 ist ein mikromechanisches Gyroskop offenbart, das entkoppelte Antriebs- und Ausleseoszillatoren aufweist, bei reduzierter Achsen-Quersensitivität.

Aufgabe der vorliegenden Erfindung ist es, eine Anordnung zur Messung einer Drehrate anzugeben, deren Genauigkeit hohen Anforderungen genügt und welche einen großen Dynamikbereich aufweist, das heißt, kleinste Drehraten sollen noch mit ausreichender Genauigkeit gemessen werden, während bei großen Drehraten keine Übersteuerung auftritt.

Diese Aufgabe wird bei der erfindungsgemäßen Anordnung dadurch gelöst, dass den feststehenden Elektroden der kapazitiven Antriebselemente Erregerspannungen zuführbar sind, deren Frequenz der Resonanzfrequenz oder einer Subharmonischen der Resonanzfrequenz des Vibrationssensors entspricht, dass kapazitiven Elementen, die zur Messung der angeregten Vibration dienen, eine Wechselspannung mit einer ersten Messfrequenz zuführbar ist, die höher als die Frequenz der Erregerspannungen ist, und dass den feststehenden Elektroden der kapazitiven Messelemente Wechselspannungen mit einer zweiten Messfrequenz zugeführt werden, die sich von der ersten Messfrequenz unterscheidet und höher als die Frequenz der Erregerspannungen ist.

Die erfindungsgemäße Anordnung ist derart ausgebildet, dass zur Messung der angeregten Vibration weitere kapazitive Messelemente vorgesehen sind. Beispielsweise können aber auch zur Messung der angeregten Vibration die kapazitiven Antriebselemente dienen.

Eine vorteilhafte und störungssichere Möglichkeit zur Gewinnung des die Drehrate beschreibenden Ausgangssignals besteht bei der erfindungsgemäßen Anordnung durch Mittel, welche ein vom festen Anschluss abgegriffenes Signal zur Bildung eines die Drehrate darstellenden Signals unter Verwendung der Wechselspannung mit der zweiten Messfrequenz und anschließend mit der Erregerspannung synchron demodulieren.

Eine andere Ausgestaltung der Erfindung sieht Mittel vor, welche das von dem feststehenden Anschluss abgegriffene Signal ferner mit der ersten Messfrequenz demodulieren und das demodulierte Signal zur Regelung der Erregerspannungen verwenden.

Durch die Erfindung ist es möglich, die Anordnung mit erheblichen Wechselspannungen zum Antrieb zu betreiben und dabei in Kauf zu nehmen, dass auch die zur Regelung des Antriebs den zweiten kapazitiven Elementen entnommenen und die zur Bildung des Drehratensignals den dritten kapazitiven Elementen entnommenen Signale äußerst klein sind. Wegen der geringen Störanteile durch die Antriebsströme sind jedoch diese Signale gut auszuwerten, insbesondere bei Anwendung von im Stand der Technik zur Verfügung stehenden Technologien, beispielsweise rauscharmen Verstärkern. Dabei ist insbesondere vorgesehen, dass an den feststehenden Anschluss ein Ladungsverstärker angeschlossen ist, dessen Ausgang mit einem Bandpassfilter verbunden ist. Dadurch werden noch geringe Reste der Antriebsströme weiter gedämpft.

Um die am feststehenden Anschluss auftretenden Antriebsströme von vornherein gering zu halten, besteht eine andere Weiterbildung darin, dass mindestens vier Gruppen von kapazitiven Antriebselementen, von denen jeweils zwei Gruppen mit gegenphasigen Wechselspannungsanteilen und gleichen Vorspannungen beaufschlagt sind, vorgesehen sind.

Dies kann beispielsweise wie folgt vorgenom-

men werden:

$$U1 = U10 + U11\sin\omega t$$

$$U2 = U10 - U11\sin\omega t$$

$$U3 = -U1$$

$$U4 = -U2$$

Dadurch kompensieren sich die Ladungsströme am feststehenden Anschluss, während die generierten Antriebsmomente verstärkt werden, da die Antriebsmomente proportional $U^2$ sind. Diese Maßnahmen sind auch ohne die Maßnahmen der vorhergehenden Ansprüche erfolgreich anwendbar und verringern deutlich die durch die Erregerspannungen bewirkten Störungen. Die Wahl der Frequenzen bzw. der Verhältnisse der Frequenzen zueinander kann der Fachmann im Einzelnen unter Berücksichtigung der jeweils vorliegenden Umstände treffen. Es hat sich jedoch als günstig erwiesen, wenn die erste und die zweite Messfrequenz innerhalb eines Bereichs vom 10-fachen bis zum 500-fachen der Frequenz der Erregerspannung liegen.

Die Erfindung ist für verschiedene Arten von Vibrationssensoren geeignet, vorzugsweise ist jedoch vorgesehen, dass der Vibrationssensor ein Vibrationskreisel ist. Es können jedoch auch beispielsweise linear schwingende Vibrationssensoren erfindungsgemäß ausgestaltet sein.

Die Erfindung lässt zahlreiche Ausführungsformen zu. Eine davon ist schematisch in der Zeichnung anhand mehrerer Figuren dargestellt und nachfolgend beschrieben. Es zeigt:

Fig. 1 schematisch eine Draufsicht auf einen Vibrationskreisel mit den zum Antrieb und zur Regelung des Antriebs erforderlichen Elementen und zugeführten Wechselspannungen,

Fig. 2 eine schematische Seitenansicht des Vibrationskreisels mit den zur Signalabnahme erforderlichen Komponenten,

Fig. 3 ein Spektrum der am feststehenden Anschluss des Vibrationskreisels anliegenden Signale,

Fig. 4 ein Blockschaltbild einer erfindungsgemäßen Anordnung und

Fig. 5 Spannungszeitdiagramme verschiedener bei der Anordnung nach Fig. 4 auftretender Signale.

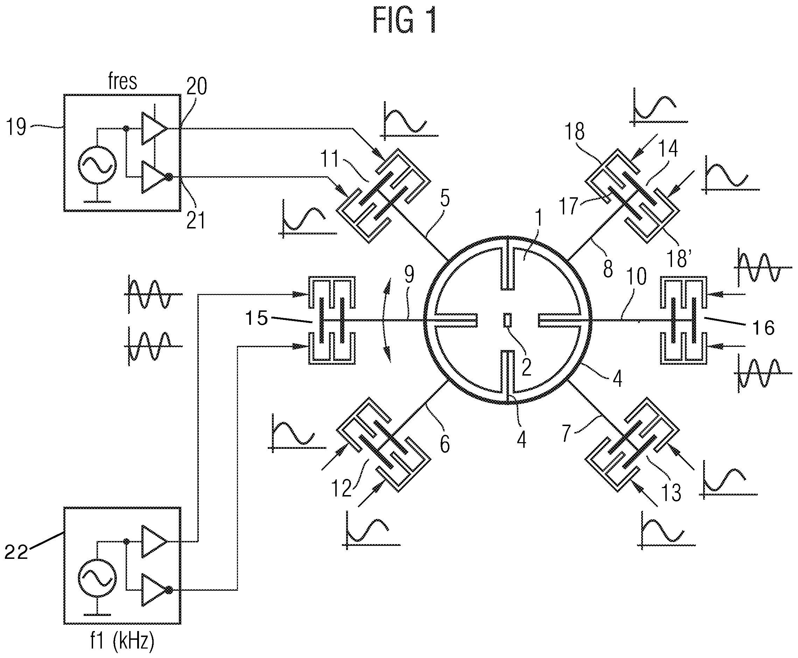

Der in Fig. 1 dargestellte Vibrationskreisel besteht aus einer Scheibe 1, die bei 2 kippbar, jedoch nicht drehbar gelagert ist. Ein Ring 3 ist über federnden Zungen 4 mit der Scheibe 1 derart verbunden, dass er gegenüber der Scheibe 1 in eine Rotationsvibration versetzt werden kann.

Am Umfang des Ringes 3 befinden sich mehrere Arme 5 bis 10, die kapazitive Elemente 11 bis 16 tragen. In der schematischen Darstellung gemäß Fig. 1 sind die Arme 5 bis 10 gegenüber einem ausgeführten Ausführungsbeispiel verlängert dargestellt. Die kapazitiven Elemente 11 bis 16 bestehen jeweils aus am Arm angeordneten und daher mit dem Ring 3 beweglichen Elektroden 17 und feststehenden Elektroden 18, 18'.

Die feststehenden Elektroden 18, 18' sind isoliert auf einem nicht dargestellten Substrat aufgebracht, das einstückig auch die Teile 1 bis 17 trägt. Verfahren zur Strukturierung des Substrats sind in der Technik bekannt und brauchen im Zusammenhang mit der Erfindung nicht näher erörtert zu werden.

Den Elektroden 18, 18' der kapazitiven Elemente 11 bis 14 werden Wechselspannungen gleicher Frequenz, jedoch unterschiedlicher Phasenlage zur Erregung der Rotationsvibration zugeführt - im Folgenden Erregerspannung genannt. Dabei wird - wie in den kleinen Diagrammen dargestellt - den Erregerspannungen jeweils eine Gleichspannung überlagert, so dass die Elektroden 18 und die Elektroden 18' gleiche Gleichspannungsanteile und gegenphasige Wechselspannungsanteile aufweisen. Dies erfolgt, um ein periodisches Gesamtmoment zu erzeugen, da das beispielsweise an der Elektrode 18 erzeugte Moment dem Quadrat der dort angelegten Spannung proportional und somit immer positiv ist. Erst die Summe beider Momente, die von den Elektroden 18 und 18' erzeugt werden, enthält den gewünschten Wechselanteil.

Zur Erzeugung einer ausreichend hohen Antriebskraft sind die Elektroden 17 mit den Elektroden 18, 18' kammartig verschachtelt, wobei der Übersichtlichkeit halber nur jeweils zwei Einzelelektroden dargestellt sind, in der Praxis jedoch die Zahl wesentlich höher ist.

Ein Frequenz gesteuerter Oszillator (VCO) 19 mit zwei gegenphasigen Ausgängen 20, 21 dient zur Erzeugung von gegenphasigen Erregerspannungen, die mit entsprechenden Vorspannungen versehen den kapazitiven Elementen 11 bis 14 zugeführt werden. Als nicht dargestellte Rückführung der durch die Erregerspannungen erzeugten Ströme dient der Anschluss 2, der später im Zusammenhang mit der Gewinnung des Drehratensignals noch erläutert wird. Zur Regelung der Rotationsvibration dienen die kapazitiven Messelemente 15, 16, wobei diese mit Wechselspannungen beaufschlagt werden, die in einem Oszillator 22 erzeugt werden und eine erste Messfrequenz f1 aufweisen. Wie ebenfalls später erläutert, dient die Zuführung dieser Wechselspannungen zur Messung der Kapazität der kapazitiven Elemente 15, 16 und damit zur Gewinnung eines Signals, das die Rotationsvibration wiedergibt.

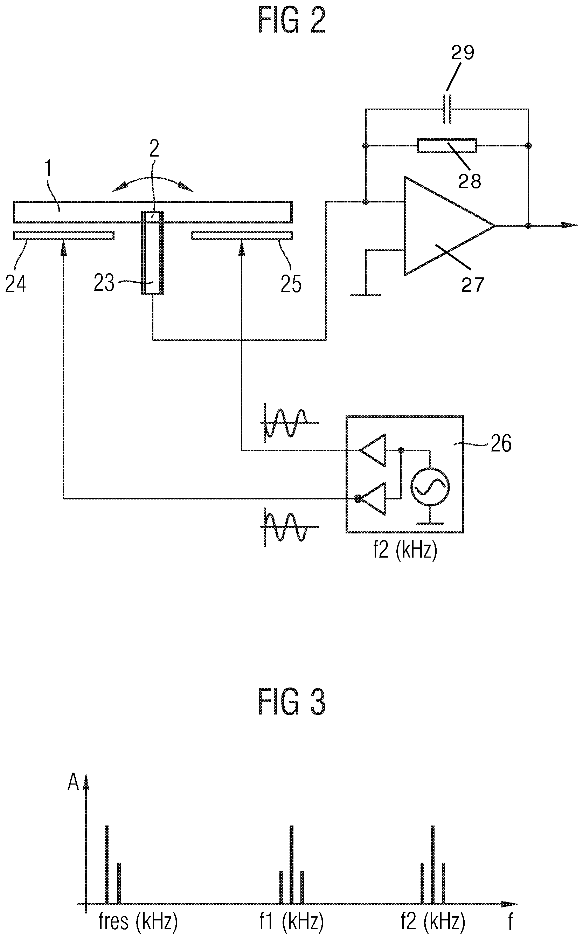

Fig. 2 zeigt die Scheibe 1 und deren Lagerung 2 mit dem gemeinsamen Anschluss 23 in einer Seitenansicht. Die durch einen Doppelpfeil dargestellte Bewegung ist durch die Corioliskraft verursacht und stellt die zu messende Drehrate dar. Die Kippbewegung wird durch eine Kapazitätsmessung ermittelt, wozu zwei Elektroden 24, 25 mit gegenphasigen Wechselspannungen beaufschlagt werden, die von einem Oszillator 26 erzeugt werden und eine zweite Messfrequenz f2 aufweisen. Der feststehende Anschluss 23 ist mit dem Eingang eines Verstärkers 27 verbunden, der über einen Widerstand 28 und einen Kondensator 29 gegengekoppelt ist und eine Form eines Ladungsverstärkers darstellt.

Das Signal am Anschluss 23 weist das in Fig. 3 angedeutete Spektrum auf, und zwar Komponenten mit der Erregerfrequenz (im dargestellten Beispiel die Resonanzfrequenz fres), mit der doppelten Erregerfrequenz, die infolge der Mischung von Kapazitätsoszillation und Anregungsspannung entsteht und erhebliche Werte annimmt, mit der ersten Messfrequenz f1 und mit der zweiten Messfrequenz f2. Die Messfrequenzen weisen Seitenbänder auf, welche die Messinformationen beinhalten. Die Komponenten mit den Frequenzen fres und 2xfres können erhebliche Übersteuerungen und Störungen hervorrufen und werden durch die Vorzeichenalternierende Ansteuerung in vier Antriebsgruppen weitgehend unterdrückt.

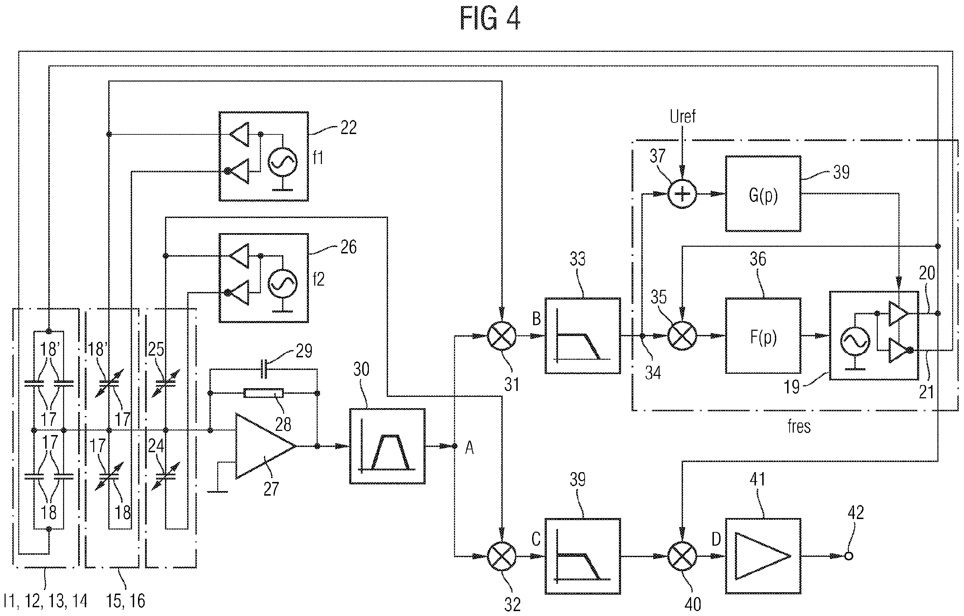

Im Blockschaltbild gemäß Fig. 4 sind die kapazitiven Elemente 11 bis 14 und 15, 16 gegenüber Fig. 1 unabhängig von ihrer mechanischen Ausbildung dargestellt, so dass die Elektroden 18 bzw. 18' jeweils zusammen mit den Elektroden 17 ein Kondensatorpaar darstellen, wobei der Übersichtlichkeit halber anstelle von vier Kondensatorpaaren 11 bis 14 nur zwei und anstelle von zwei Kondensatorpaaren 15, 16 nur eines dargestellt sind. Die Ladungsverstärkung 27 am Ausgang 23 sowie die nachfolgende Bandpassfilterung 30 wurden bereits im Zusammenhang mit den Figuren 2 und 3 beschrieben.

An den Ausgang A des Filters 30 sind zwei Multiplizierer 31, 32 angeschlossen, in denen eine Synchrondemodulation mit den Messfrequenzen f1 und f2 erfolgt. Die demodulierten Signale sind mit B und C bezeichnet. Nach einer Tiefpassfilterung bei 33 liegt bei 34 ein Signal vor, das die Rotationsoszillation des Vibrationskreisels wiedergibt. Dieses Signal wird einem weiteren Multiplizierer 35 zugeführt, der zusammen mit einem Regler 36 mit der Charakteristik F(p) und dem Oszillator 19 einen Regelkreis bildet. Dadurch werden sowohl die Frequenz als auch die Phasenlage der Ausgangsspannung des Oszillators 19 derart gesteuert, dass eine stabile Schwingung entsteht. Zur Steuerung der Amplitude der Schwingung wird das bei 34 anstehende Signal über einen Addierer 37 mit einer Referenzspannung Uref verglichen und über einen weiteren Regler 38 mit der Charakteristik G(p) einem Steuereingang des Oszillators 19 zugeführt, an dessen Ausgängen 20, 21 die mit einem Gleichspannungsanteil versehene Erregerspannung ansteht.

Zur Erzeugung des Drehratensignals wird das Ausgangssignal C des Multiplizierers 32 einem Tiefpassfilter 39 zugeleitet. Von dort gelangt es zu einem weiteren Multiplizierer 40, dem ferner ein Signal mit der Frequenz fres zugeführt wird, wodurch dieser als Synchrondemodulator arbeitet. Das demodulierte Signal D stellt das Drehratensignal dar, das über einen Verstärker 41 einem Ausgang 42 zugeleitet wird.

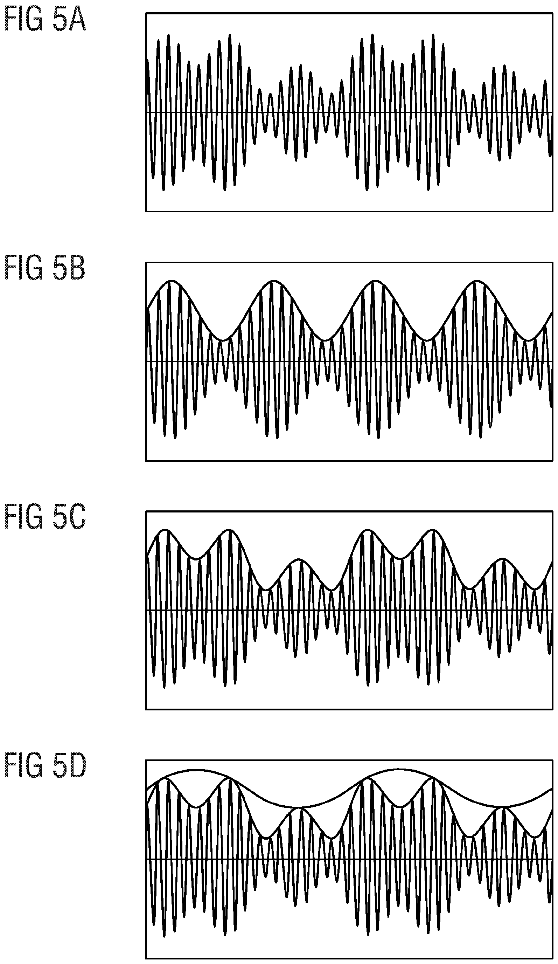

Fig. 5 zeigt verschiedene Zeitdiagramme, nämlich ein Diagramm A, welches das Ausgangssignal A des Filters 30 darstellt, ein Diagramm B, welches das Ausgangssignal B des Synchrondemodulators 31 darstellt, ein Diagramm C mit dem Ausgangssignal C des Synchrondemodulators 32 und ein Diagramm D mit dem Ausgangssignal D des Synchrondemodulators 40, wobei zur Verdeutlichung der Demodulation in den Diagrammen B, C und D zusätzlich zu der Einhüllenden, nämlich dem Ergebnis der Demodulation, noch der Träger dargestellt ist.

**Patentansprüche**

1. Anordnung zur Messung einer Drehrate mit einem Vibrationssensor (1, 2, 3), mit kapazitiven Antriebselementen (11 bis 14), mit kapazitiven Messelementen (24, 25), mit einem feststehenden Anschluss (2; 23) und mit kapazitiven Elementen (15, 16), die zur Messung einer angeregten Vibration dienen, wobei die Vibration des Vibrationssensors (1, 2, 3) senkrecht zu einer ersten Achse mit Hilfe der kapazitiven Antriebselemente (11 bis 14) angeregt wird und dessen Drehung in einer zweiten Achse, die durch eine Drehung in einer dritten Achse unter Wirkung der Corioliskraft angeregt wird, mit Hilfe der kapazitiven Messelemente (24, 25) gemessen wird, wobei die kapazitiven Elemente jeweils von feststehenden Elektroden (18, 18'; 24, 25) und von mit dem Vibrationssensor beweglichen Elektroden (17; 1) gebildet werden und die beweglichen Elektroden (17; 1) gemeinsam mit dem feststehenden Anschluss (2; 23) verbunden sind, wobei die feststehenden Elektroden (18, 18') der kapazitiven Antriebselemente (11 bis 14) so angeordnet sind, dass ihnen Erregerspannungen zugeführt werden, deren Frequenz der Resonanzfrequenz oder einer Subharmonischen der Resonanzfrequenz des Vibrationssensors (1, 2, 3) entspricht, dadurch gekennzeichnet, dass die kapazitiven Elemente (15, 16), die zur Messung der angeregten Vibration dienen, so angeordnet sind, dass ihnen eine Wechselspannung mit einer ersten Messfrequenz zugeführt wird, die höher als die Frequenz der Erregerspannungen ist, und dass die feststehenden Elektroden (24, 25) der kapazitiven Messelemente so angeordnet sind, dass ihnen Wechselspannungen mit einer zweiten Messfrequenz zugeführt werden, die sich von der ersten Messfrequenz unterscheidet und höher als die Frequenz der Erregerspannungen ist.

**2.** Anordnung nach Anspruch 1, **dadurch gekennzeichnet, dass** Mittel vorgesehen sind, welche ein vom festen Anschluss (23) abgegriffenes Signal zur Bildung eines die Drehrate darstellenden Signals unter Verwendung der Wechselspannung mit der zweiten Messfrequenz und anschließend mit der Erregerspannung synchron demodulieren.

**3.** Anordnung nach Anspruch 2, **dadurch gekennzeichnet, dass** Mittel vorgesehen sind, welche das von dem feststehenden Anschluss (23) abgegriffene Signal ferner mit der ersten Messfrequenz demodulieren und das demodulierte Signal zur Regelung der Erregerspannungen verwenden.

**4.** Anordnung nach einem der vorhergehenden Ansprüche, **dadurch gekennzeichnet, dass** an den feststehenden Anschluss (23) ein Ladungsverstärker (27) angeschlossen ist, dessen Ausgang mit einem Bandpassfilter (30) verbunden ist.

**5.** Anordnung nach einem der vorhergehenden Ansprüche, **dadurch gekennzeichnet, dass** mindestens vier Gruppen von kapazitiven Antriebselementen, von denen jeweils zwei Gruppen mit gegenphasigen Wechselspannungsanteilen und gleichen Vorspannungen beaufschlagt sind, vorgesehen sind.

**6.** Anordnung nach einem der vorhergehenden Ansprüche, **dadurch gekennzeichnet, dass** die erste und die zweite Messfrequenz innerhalb eines Bereichs vom 10-fachen bis zum 500-fachen der Frequenz der Erregerspannung liegen.

**7.** Anordnung nach einem der vorhergehenden Ansprüche, **dadurch gekennzeichnet, dass** der Vibrationssensor ein Vibrationskreisel (1 bis 18') ist.

## Claims

**1.** Arrangement for measuring a rate of rotation using a vibration sensor (1, 2, 3), having capacitive drive elements (11 to 14), having capacitive measuring elements (24, 25), having a fixed connection (2; 23) and having capacitive elements (15, 16) which are used to measure an excited vibration, wherein the vibration of the vibration sensor (1, 2, 3) perpendicular to a first axis is excited with the aid of the capacitive drive elements (11 to 14), and its rotation in a second axis, which is excited by rotation in a third axis under the action of the Coriolis force, is measured with the aid of the capacitive measuring elements (24, 25), the capacitive elements each being formed by fixed electrodes (18, 18'; 24, 25) and by electrodes (17; 1) which can be moved with the vibration sensor, and the movable electrodes (17; 1) being jointly connected to the fixed connection (2; 23), wherein the fixed electrodes (18, 18') of the capacitive drive elements (11 to 14) are arranged in such a way that they are supplied with excitation voltages, the frequency of which corresponds to the resonant frequency or to a subharmonic of the resonant frequency of the vibration sensor (1, 2, 3), **characterized in that** the capacitive elements (15, 16) which are used to measure the excited vibration are arranged in such a way that they are supplied with an AC voltage at a first measuring frequency which is higher than the frequency of the excitation voltages, and **in that**

the fixed electrodes (24, 25) of the capacitive measuring elements are arranged in such a way that they are supplied with AC voltages at a second measuring frequency which differs from the first measuring frequency and is higher than the frequency of the excitation voltages.

**2.** Arrangement according to Claim 1, **characterized in that** provision is made of means which, in order to form a signal which represents the rate of rotation, synchronously demodulate a signal tapped off from the fixed connection (23) using the AC voltage at the second measuring frequency and then using the excitation voltage.

**3.** Arrangement according to Claim 2, **characterized in that** provision is made of means which also demodulate the signal tapped off from the fixed connection (23) using the first measuring frequency and use the demodulated signal to regulate the excitation voltages.

**4.** Arrangement according to one of the preceding claims, **characterized in that** a charge amplifier (27) whose output is connected to a bandpass filter (30) is connected to the fixed connection (23).

**5.** Arrangement according to one of the preceding claims, **characterized in that** at least four groups of capacitive drive elements are provided, antiphase AC voltage components and the same bias voltages respectively being applied to two of said groups.

**6.** Arrangement according to one of the preceding claims, **characterized in that** the first and second measuring frequencies are within a range of 10 times to 500 times the frequency of the excitation voltage.

**7.** Arrangement according to one of the preceding claims, **characterized in that** the vibration sensor is a vibrational gyroscope (1 to 18').

## Revendications

**1.** Dispositif destiné à la mesure d'une vitesse de rotation avec un capteur de vibration (1, 2, 3), avec des éléments d'entraînement (11 à 14) capacitifs, avec des éléments de mesure (24, 25) capacitifs, avec un raccord (2 ; 23) fixe et avec des éléments (15, 16) capacitifs qui servent à la mesure d'une vibration excitée, selon lequel la vibration du capteur de vibration (1, 2, 3) est excitée à la perpendiculaire d'un premier axe à l'aide des éléments d'entraînement (11 à 14) capacitifs et sa rotation est mesurée dans un deuxième axe, laquelle est excitée par une rotation dans un troisième axe sous l'action de la force de Coriolis, à l'aide des éléments de mesure (24, 25) capacitifs, selon lequel les éléments capacitifs sont formés respectivement par des électrodes (18, 18' ; 24, 25) fixes et par des électrodes (17 ; 1) en mouvement avec le capteur de vibration et les électrodes (17 ; 1) en mouvement sont raccordées ensemble avec le raccord (2 ; 23) fixe, selon lequel les électrodes (18, 18') fixes des éléments d'entraînement (11 à 14) capacitifs sont disposées de telle sorte que des tensions d'excitation leur sont administrées, dont la fréquence correspond à la fréquence de résonance ou à une sous-harmonique de la fréquence de résonance du capteur de vibration (1, 2, 3), **caractérisé en ce que** les éléments (15, 16) capacitifs qui servent à la mesure de la vibration excitée sont disposés de telle sorte qu'une tension alternative leur est administrée avec une première fréquence de mesure, laquelle est supérieure à la fréquence des tensions d'excitation ; et **caractérisé en ce que** les électrodes (24, 25) fixes des éléments de mesure capacitifs sont disposées de telle sorte que des tensions alternatives leur sont administrées avec une deuxième fréquence de mesure, laquelle est différente de la première fréquence de mesure et laquelle est supérieure à la fréquence des tensions d'excitation.

**2.** Dispositif selon la revendication 1, caractérisé en ce des moyens sont prévus, lesquels permettent de démoduler de manière synchrone un signal capté par le raccord (23) fixe, en vue de la formation d'un signal représentant la vitesse de rotation, en utilisant la tension alternative avec la deuxième fréquence de mesure, puis avec la tension d'excitation.

**3.** Dispositif selon la revendication 2, **caractérisé en ce que** des moyens sont prévus, lesquels permettent en outre de démoduler le signal capté par le raccord (23) fixe avec la première fréquence de mesure et d'utiliser le signal ainsi démodulé en vue de la régulation des tensions d'excitation.

**4.** Dispositif selon l'une des revendications précédentes,

**caractérisé en ce qu'**un amplificateur de charge (27) est raccordé au raccord (23) fixe et la sortie dudit amplificateur de charge est raccordée à un filtre passe-bande (30).

**5.** Dispositif selon l'une des revendications précédentes, **caractérisé en ce que** sont prévus au moins quatre groupes d'éléments d'entraînement capacitifs, parmi lesquels respectivement deux groupes sont soumis à des composantes de tension alternative en opposition de phase et à des tensions de polarisation identiques.

**6.** Dispositif selon l'une des revendications précédentes, **caractérisé en ce que** la première et la deuxième fréquence de mesure se situent à l'intérieur d'une plage comprise entre 10 fois et 500 fois la fréquence de la tension d'excitation.

**7.** Dispositif selon l'une des revendications précédentes, **caractérisé en ce que** le capteur de vibration est un gyroscope à vibration (1 à 18').

FIG 1

# FIG 2

# FIG 3

FIG 4

FIG 5A

FIG 5B

FIG 5C

FIG 5D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5955668 A
- US 2006156815 A1
- US 6626039 B1